# FASCICULE DE BREVET EUROPEEN

(11) **EP 0 572 299 B1**
(45) Date de publication et mention de la délivrance du brevet: **04.09.1996**
(21) Numéro de dépôt: 93401268.3
(22) Date de dépôt: 18.05.1993
(51) Int. Cl.: F16K 31/54, F16K 11/074

(54) **Dispositif de distribution de fluide**
Vorrichtung zur Fluidverteilung
Fluid delivery apparatus

(30) Priorité: 26.05.1992 FR 9206415
(43) Date de publication de la demande: 01.12.1993
(73) Titulaire: WABCO France, F-77410 Claye Souilly (FR)
(72) Inventeur: l'Her, Didier, F-93140 Bondy (FR); Sanchez, Angel, F-77590 Chartrettes (FR)
(74) Mandataire: Hirsch, Marc-Roger

(56) Documents cités:
- GB-A- 0 286 592
- GB-A- 2 233 743
- NL-C- 0 025 322
- US-A- 3 338 140

## Description

La présente invention s'applique à un dispositif de distribution de fluide en fonction de la position d'un organe d'actionnement à déplacement axial, ce dispositif comprenant d'une part un élément de plaque d'embase à surface d'étanchéité fixe plane, sur laquelle débouche au moins une canalisation d'alimentation en fluide sous pression, et au moins une canalisation à alimenter en fluide sous pression et, d'autre part, un élément de plaque de distribution à surface d'étanchéité plane mobile, en appui de façon étanche, sur la surface d'étanchéité fixe plane, des passages de liaison de fluide ouvert respectivement vers l'échappement et vers la canalisation d'alimentation en fluide sous pression débouchant sur ladite surface d'étanchéité mobile pour permettre la liaison de la canalisation à alimenter en fluide, soit à l'échappement, soit à la canalisation d'alimentation en fluide sous pression, l'élément de plaque de distribution étant solidaire en rotation d'un élément de commande monté rotatif dans un logement de guidage qui présente une forme générale cylindrique, et qui comporte, sur au moins une partie de sa périphérie, une denture d'engrenage qui engrène tangentiellement avec une denture d'engrenage conjuguée ménagée sur une crémaillère rendue solidaire de l'organe d'actionnement à déplacement axial.

On connaît déjà, par exemple de NL-A-25322, des valves de distribution de fluide selon le préambule de la revendication 1 comportant un organe distributeur ou tiroir à glace, c'est-à-dire à surfaces d'étanchéité planes glissant l'une par rapport à l'autre. Dans de tels dispositifs de distribution de fluide, un tiroir rotatif peut être entraîné en rotation par un pignon d'engrenage solidaire en rotation du tiroir et qui engrène avec une crémaillère d'actionnement de la valve. De telles valves à glace qui n'étaient plus utilisées à cause de la difficulté à établir un contact plan étanche suscitent à nouveau l'intérêt des spécialistes car le système de glace de distribution peut maintenant être constitué plus économiquement par des plaquettes en céramique.

Le problème se pose actuellement pour certains appareils de disposer d'une valve de distribution de fluide qui présente une très grande fiabilité (c'est-à-dire qui soit à même de supporter sans fuite ou dégradation plus de 10 millions d'actionnements), une très grande compacité, la valve elle-même étant moins encombrante que les raccords extérieurs de fluide, et des possibilités de réglage précis du point d'actionnement de la valve en fonction de la position axiale de l'organe d'actionnement. Ces problèmes qui viennent d'être exposés se présentent par exemple pour les valves pneumatiques de commutation ou de passage des rapports de transmission à engrenages pour véhicules, qui doivent être actionnées dès que l'embrayage du moteur du véhicule a effectué sa course de débrayage normal, sans attendre l'achèvement de la course de débrayage supplémentaire consécutive à l'usure de l'embrayage.

Afin d'obtenir une grande fiabilité de la valve et de lui donner la possibilité d'effectuer sans défaillance un nombre très important d'actionnements, les systèmes d'étanchéité à joints d'étanchéité en élastomère sont à proscrire et seuls les systèmes de distribution à plaque en céramique à haute planéité sont à même d'effectuer la détente du fluide sur les chambres de distribution sans présenter d'usure notable ou des pertes partielles d'étanchéité. L'actionnement correct de ces valves à plaquettes de céramique, nécessite par contre d'effectuer un mouvement d'actionnement au moins louvoyant et, si possible, tournant, ce qui présente par ailleurs l'avantage de réduire l'encombrement de la partie active de la valve.

Le réglage du point d'actionnement de ces valves en fonction de la position axiale de l'organe d'actionnement nécessite parfois une action de réglage in situ après montage de la valve, ce qui ne peut guère se réaliser à l'intérieur d'un circuit de fluide sous pression et nécessite d'intercaler des moyens de transmission réglables entre l'organe d'actionnement et la valve de distribution proprement dite.

La présente invention a notamment pour objet de proposer un dispositif de distribution de fluide qui soit apte à satisfaire les exigences de fiabilité, de faible encombrement et de facilité de réglage in situ exposées ci-dessus, notamment afin de réaliser des valves de commutation des rapports de transmission contrôlées par l'embrayage d'un moteur de traction.

A cet effet, selon l'invention, l'élément de plaque de distribution est monté axialement mobile, sensiblement selon l'axe de rotation de l'élément de commande, dans un alésage borgne de l'élément de commande, en coopérant avec un joint d'étanchéité annulaire pour déterminer, entre au moins une partie de sa paroi de fond et au moins une partie de la paroi de fond dudit alésage borgne une chambre de rappel, reliée en permanence à la canalisation d'alimentation en fluide sous pression par une canalisation de pressurisation ménagée à travers l'épaisseur de l'élément de plaque de distribution, un ressort mécanique de rappel étant interposé entre le fond de l'alésage borgne et l'élément de distribution pour repousser en permanence celui-ci au contact de l'élément de plaque d'embase, de manière que la pression de fluide de la canalisation d'alimentation agisse dans la chambre de rappel pour repousser, en parallèle audit ressort de rappel, la surface d'étanchéité mobile de l'élément de distribution sur la surface d'étanchéité fixe de l'élément d'embase, en prenant appui sur ledit fond d'appui fermant le logement de guidage.

La crémaillère peut être rendue solidaire en translation de l'organe d'actionnement à déplacement axial par un organe de liaison à friction, qui est susceptible, respectivement, de glisser à friction sur l'organe d'actionnement lorsque la crémaillère est en appui axial de butée dans son passage de guidage et d'entraîner axialement la crémaillère lorsque celle-ci n'est pas en appui axial sur une butée. Cette disposition convient particulièrement lorsque l'organe d'actionnement est solidaire du piston de débrayage d'un organe de servo-débrayage d'un embrayage. En effet, au cours de l'usure progressive du disque et des plateaux d'embrayage, le piston de servo-débrayage est repoussé progressivement par la butée d'embrayage au fond du cylindre de servo-débrayage, de manière à placer la course effective de débrayage de plus en plus au début de la course du piston de servo-débrayage. Ce refoulement progressif du piston de servo-débrayage vers le fond du cylindre d'assistance est absorbé par le dispositif de distribution selon l'invention car la crémaillère vient chaque fois en appui axial sur sa butée après retour du piston de servo-débrayage en position d'embrayage. L'excès de course de retour du piston de servo-débrayage est utilisé pour faire glisser à friction l'organe de liaison dans la crémaillère alors immobilisée en butée axiale. A l'actionnement suivant, la crémaillère effectue à nouveau sa course à partir du point de recul extrême du piston de servo-débrayage, jusqu'à l'appui sur la butée de débrayage.

Selon un autre mode de réalisation de l'invention, le logement de guidage de l'élément de commande rotatif est ouvert sur l'engrènement entre la denture d'engrenage de l'élément de commande et la denture de crémaillère et est ménagé dans un couvercle du logement de l'élément d'embase portant des surfaces opposées de guidage axial de la crémaillère, situées respectivement du côté de la denture de la crémaillère et du côté opposé à cette denture, ledit couvercle obture ledit logement de l'élément d'embase et présente une surface d'appui pour une face de la crémaillère qui est latérale par rapport à la denture de la crémaillère.

Selon un autre mode de réalisation de l'invention, l'élément de plaque de distribution comporte du côté de sa surface d'étanchéité plane un dégagement latéral en forme de quart de cercle, susceptible de venir se placer, d'une part, en face du débouché de la canalisation à alimenter en fluide sous pression, pour la relier à l'échappement via un passage ménagé entre la face latérale de l'élément de commande rotatif et l'élément de plaque d'embase et, d'autre part, en face de la surface d'étanchéité plane fixe de l'élément de plaque d'embase hors de tout débouché de canalisation. L'élément de plaque de distribution comporte, sur sa surface d'étanchéité plane, une cavité de faible profondeur en forme générale de bande en arc s'étendant sensiblement sur un demi-cercle, entourée sur toute sa périphérie par la surface d'étanchéité plane et au fond de laquelle débouche le passage de pressurisation et la canalisation d'alimentation en fluide sous pression qui traverse l'élément de plaque d'embase, débouche sur cette cavité en creux pour toutes les positions en rotation de la plaque de distribution, tandis que la canalisation à alimenter en fluide sous pression débouche sur cette cavité en creux seulement sur une zone de fin de course de rotation de la plaque de distribution, correspondant à la mise en communication de la canalisation d'alimentation et de la canalisation à alimenter en fluide sous pression, à partir d'une position déterminée de l'organe d'actionnement.

La liaison d'échappement du dégagement latéral est constituée principalement et successivement, depuis ledit dégagement latéral, par au moins un passage en forme générale d'arc circulaire ménagé entre le bord latéral de la denture d'engrenage de l'élément de commande et l'élément de plaque d'embase, puis par un passage longitudinal ménagé entre le bord latéral de la crémaillère et la face d'appui de crémaillère du logement de l'élément de plaque d'embase.

Lorsque le fluide sous pression est de l'air comprimé et lorsque l'organe d'actionnement est une tige qui traverse la crémaillère, cette tige est susceptible de traverser une vis de butée réglable de la fin de course axiale de la crémaillère, dans un alésage de ladite vis présentant une section supérieure à celle de la tige pour délimiter un passage annulaire d'échappement qui est relié, d'une part, au passage longitudinal d'échappement ménagé le long de la crémaillère et, d'autre part, à une chambre d'échappement protégée des projections extérieures par un cache élastique de communication avec l'atmosphère.

D'autres buts, avantages et caractéristiques apparaîtront à la lecture de la description d'un mode de réalisation de l'invention, faite à titre non limitatif et en regard du dessin annexé, dans lequel:
- - la figure 1: est une vue en coupe selon les plans de coupe IA et IB de la figure 2, du dispositif de distribution de fluide selon l'invention, fixé sur un cylindre de servo-débrayage représenté en vue fragmentaire;
- - la figure 2: est une vue, à plus grande échelle et en coupe, selon le plan II-II de la figure 1;
- - la figure 3: est une vue, à la même échelle que la figure 2 et en coupe selon le plan III-III, des figures 1 et 4;
- - la figure 4: est une vue extérieure, à plus petite échelle que la figure 1, du dispositif de distribution, faisant apparaître les raccords de fluide vers l'extérieur.

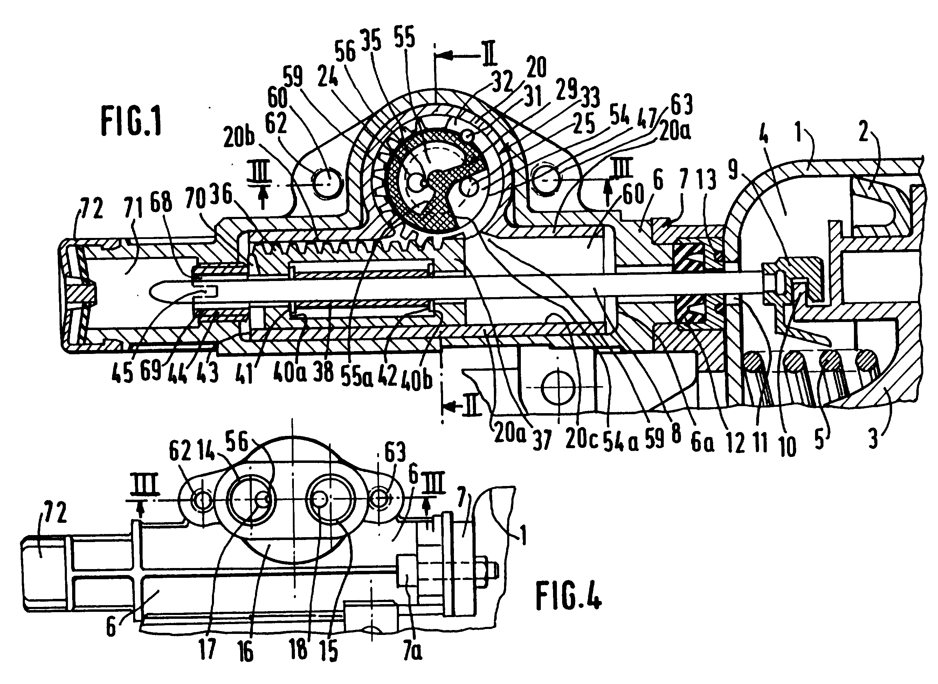

Si l'on se reporte à la figure 1, on voit représenté en coupe de façon fragmentaire un cylindre de servo-débrayage 1 dans lequel se déplace, de façon étanche grâce à un joint annulaire d'étanchéité 2, un piston d'assistance 3 qui vient repousser, sous l'action d'une pression d'air comprimé délivrée à une chambre d'actionnement 4, un levier de débrayage non représenté. Une extrémité de ce levier de débrayage est continuellement en appui sur une butée de débrayage sous l'action d'un ressort de rappel 5 dont l'effort de réaction est beaucoup moins important que l'effort de réaction du ressort principal (de serrage) de l'embrayage.

Dans la position représentée sur la figure, l'embrayage a atteint une position voisine de sa position d'usure maximale admissible à la commande. L'action de débrayage commence alors depuis le voisinage du fond du cylindre 1, la chambre d'actionnement 4 présentant un volume de départ faible.

Le dispositif de distribution de fluide selon l'invention a ici pour but d'alimenter (plus exactement d'autoriser l'alimentation) en fluide sous pression une conduite de commande pour réaliser, par exemple, la commutation d'un rapport de transmission (passage de vitesse) lorsque la course du piston d'actionnement 3, à partir de son point de recul extrême sous l'effort de rappel du ressort d'embrayage, atteint la course de débrayage normale.

Le dispositif de distribution est monté dans un corps 6 réalisé par exemple moulé en alliage d'aluminium et qui est fixé sur le cylindre 1 par l'intermédiaire d'un manchon 7 de raccordement et d'étanchéité, à l'aide de vis de fixation 7a engagées dans des écrous ou des filetages du fond du cylindre 1. La liaison entre le piston d'actionnement 3 et le dispositif de distribution est réalisée par l'intermédiaire d'une tige 8 formant organe d'actionnement à déplacement axial. Pour cela, la tige 8 est rendue solidaire, par tout moyen adéquat, par exemple par encliquetage à son extrémité du côté du piston 3 d'un crochet 9 qui vient s'accrocher sur un rebord 10 du piston 3. La tige 8 traverse un passage 11 du fond de cylindre 1 puis le manchon 7 par l'intermédiaire d'un joint d'étanchéité à lèvres 12 qui interdit toute fuite de la chambre d'actionnement 4, à la traversée mobile de la tige 8 vers l'extérieur de cette chambre. Le corps 6 du dispositif de distribution est plaqué avec le manchon 7 sur le fond du cylindre 1 (par l'intermédiaire des vis 7a) de façon étanche, grâce à un joint torique 13 disposé autour du débouché du passage 11 et grâce au joint à lèvres 12.

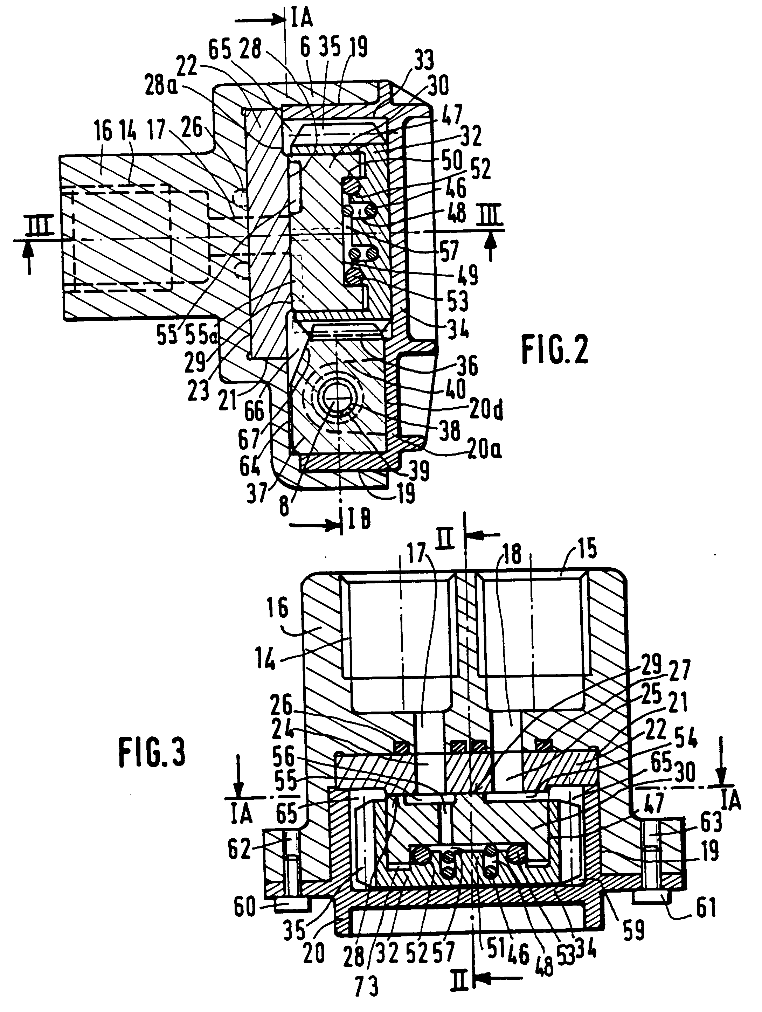

Le corps 6 comporte un raccord d'alimentation 14 en fluide sous pression, ici de l'air comprimé, et un raccord 15 vers un organe à alimenter en fluide sous pression, cet organe étant constitué par exemple par un vérin pneumatique de commande de la commutation d'un rapport de transmission. Les raccords 14 et 15 débouchent latéralement d'un boîtier 16 du corps 6 et sont prolongés chacun, comme on le voit sur la figure 3, par une canalisation de plus faible diamètre 17, 18, respectivement d'alimentation et à alimenter en fluide sous pression.

Le boîtier 16 comporte une cavité 19, fermée par un couvercle ajusté 20 et au fond de laquelle est ménagé un alésage 21 qui reçoit, de façon ajustée, un élément de plaque d'embase 22 qui vient s'appliquer sur le fond plat 23 de l'alésage 21. La plaque 22 est traversée par des passages ou canalisations 24 et 25, généralement cylindriques et qui sont raccordés respectivement, de façon étanche, avec les canalisations 17 et 18 à l'aide de joints toriques d'étanchéité 26 et 27 logés chacun dans une rainure annulaire ménagée sur le fond plat 23 autour de l'orifice de sortie de la canalisation respective 17, 18. Du côté opposé au fond plat 23, la plaque 22, réalisée de préférence en céramique, présente une surface d'étanchéité 28, parfaitement plane et lisse.

La surface d'étanchéité 28 coopère avec la surface d'étanchéité conjuguée 29 d'un élément de plaque de distribution mobile 30. La plaque 30 est portée par un élément de commande 32 monté rotatif dans un logement de guidage 33 ménagé dans le couvercle 20 et est rendue solidaire en rotation de l'élément de commande 32 par une clavette ou goupille 31 (voir la figure 1). Le logement 33, de forme générale cylindrique, est fermé par le fond 34 du couvercle 20, servant d'appui axial à l'élément de commande 32. Cet élément de commande 32, porté rotatif dans le logement 33, comporte sur au moins une partie de sa périphérie une denture d'engrenage 35 répartie sur un arc de cercle et qui engrène tangentiellement avec une denture d'engrenage conjuguée droite 36 ménagée sur une crémaillère droite 37.

La crémaillère 37 est rendue solidaire en translation de la tige 8 par un organe de liaison à friction constitué ici d'un tube fendu 38 à fente 39 et donc à élasticité radiale. Le tube fendu 38 est placé dans un logement 40 (voir la figure 2) de la crémaillère 37, ouvert latéralement pour permettre l'introduction du tube fendu 38 qui est arrêté en butée axiale sur les faces frontales 40a et 40b du logement 40 par des rondelles de butée 41 et 42. Comme on le voit sur la figure 1, la crémaillère 37 est traversée axialement par la tige 8 dans des alésages qui débouchent à chaque extrémité axiale du logement 40 sur l'une des rondelles de butée 41 ou 42 sur laquelle est en appui axial le tube fendu 38 traversé par la tige 8 qui exerce une friction importante en écartant ce tube 38 pour agrandir son diamètre intérieur. Dans la position représentée sur la figure 1, la crémaillère 37 est en appui par sa face frontale d'extrémité 43 sur une butée 44 axialement réglable par vissage dans le corps 6 à l'aide d'une fente de réglage 45. Toute poursuite du déplacement de la tige 8 vers la gauche de la figure 1 produit un glissement forcé de la tige 8 dans le tube fendu 38, du fait de la butée de la face 43 de la crémaillère sur la butée réglable 44. Un tel déplacement forcé de la tige 8 se produit chaque fois qu'une usure de la garniture du disque et/ou de la surface des plateaux de friction de l'embrayage se manifeste, le ressort de serrage de l'embrayage pouvant repousser plus loin vers la gauche le piston 3 au cours de l'embrayage.

L'élément de plaque de distribution mobile 30 est repoussé axialement, au contact de l'élément de plaque d'embase 22 par sa surface d'étanchéité 29, à l'aide de deux moyens distincts. Le premier moyen, qui agit en permanence, est constitué par un ressort mécanique, ici un ressort hélicoïdal 46, qui est interposé d'une part entre le fond (un logement 48 qui entoure le ressort 46 est ici ménagé dans ce fond) d'un alésage borgne 47 ménagé dans l'élément de commande 32 pour recevoir, de façon ajustée mais glissante axialement, l'élément de plaque de distribution mobile 30 et, d'autre part, une surface d'appui 49 prévue sur la plaque 30 au fond d'un logement à paroi latérale cylindrique intérieure 50. Le fond de l'alésage borgne 47 comporte, sur l'élément de commande 32, une partie centrale formant téton 51, dans laquelle est prévu le logement 48 et sur la périphérie de laquelle est ménagée une surface d'appui annulaire d'étanchéité 52 pour un joint d'étanchéité annulaire torique 53. Le joint 53 est interposé de façon étanche entre la paroi cylindrique intérieure 50 de la plaque mobile 30 et la surface d'appui annulaire 52, en autorisant un léger déplacement axial de la plaque de distribution mobile 30 dans son alésage 47, sans cesser d'assurer l'étanchéité entre les surfaces d'appui 52 et 50.

Sur sa face d'étanchéité 29 qui est en contact avec la face d'étanchéité 28 de la plaque fixe 22, la plaque mobile 30 présente un dégagement latéral 54 en forme de quart de cercle (voir la figure 1), de faible épaisseur et qui est susceptible de venir se placer en face du débouché de la canalisation 25 ménagée à travers la plaque 22 et reliée au raccord 15 à alimenter. Sur la face d'étanchéité 29, est également prévue une cavité de faible profondeur 55 en forme générale de bande large en arc qui s'étend sensiblement sur un peu plus d'un demi-cercle et qui est entourée sur toute sa périphérie par la surface d'étanchéité plane 29 (cette surface d'étanchéité 29 est représentée en hachures croisées à la figure 1). La canalisation 24 d'alimentation en fluide sous pression débouche en permanence sur la cavité 55.

Au fond de la cavité 55, débouche une canalisation de pressurisation 56 qui traverse la plaque mobile 30 pour déboucher dans une chambre de rappel 57 délimitée entre la surface d'appui de ressort 49, à l'arrière de la plaque 30, et la partie formant téton 51 au fond de l'alésage borgne 47. Cette chambre de rappel 57 est rendue étanche au fond de l'alésage 47 par le joint torique d'étanchéité 53, de telle manière que la pression de fluide de la canalisation d'alimentation 24 agisse sur la surface 49 pour repousser la surface d'étanchéité 29 de la plaque mobile 30 au contact de la surface d'étanchéité plane 28 de la plaque fixe 22, en parallèle avec le ressort hélicoïdal 46. La pression de fluide régnant dans la chambre de rappel 57 repousse par ailleurs, comme le ressort 46, l'élément de commande 32 sur le fond 34 du couvercle 20 qui comporte le logement de guidage 33 en forme d'alésage de réception de l'organe de commande circulaire 32.

Comme on le voit à la figure 1, l'alésage 33 du couvercle 20 est ouvert latéralement en 59 sur un passage droit 60 de guidage axial de la crémaillère 37 et qui est ménagé dans une partie 20a de forme générale parallélépipédique du couvercle 20. La partie 20a comporte deux surfaces de guidage de la crémaillère 20b, 20c, respectivement du côté de la denture 36 de la crémaillère et du côté opposé. La crémaillère 37 est guidée latéralement sur une face d'appui 20d du couvercle 20 et sur une face 64 du corps 6. L'ouverture latérale 59 de l'alésage 33 permet l'engrènement de la denture 35 de l'élément de commande 32 sur la denture 36 de la crémaillère 37. Le couvercle 20 qui maintient en place simultanément l'élément de commande circulaire 32 et la crémaillère 37 qui lui est engrenée, après mise en place latérale de la tige 8 et du tube fendu 38 dans le logement ouvert 40 de la crémaillère (voir la figure 2), est maintenu en position par des moyens de fixation représentés ici par deux vis 60 et 61 vissées dans des alésages filetés 62 et 63 ménagés sur des oreilles latérales du boîtier 16.

La cavité 55 qui débouche en permanence sur la canalisation d'alimentation 24 est susceptible, par rotation de l'élément de commande 32 et de la plaque de distribution 30 qui lui est solidaire en rotation, lorsque la crémaillère 37 se déplace vers la droite de la figure 1, de venir se placer simultanément en face de la canalisation d'alimentation 24 et en face de la canalisation à alimenter 25. Les deux canalisations 24 et 25 qui sont alors reliées par la cavité 55, sont presque diamétralement opposées et l'arc de la bande de la cavité 55 recouvre un peu plus d'un demi-cercle.

Au retour de la cavité 55 vers la position représentée sur la figure 1, le débouché de la canalisation à alimenter 25 est d'abord isolé du débouché de la canalisation d'alimentation 24 par application de la surface d'étanchéité plane 29 dès que l'arête 55a de la cavité 55 a dépassé le débouché de la canalisation 25. Ensuite, dès que la face latérale 54a du dégagement latéral 54 atteint le débouché de la canalisation à alimenter 25, cette canalisation, alors alimentée en fluide sous pression, est reliée à l'échappement par un circuit d'échappement vers l'atmosphère. Depuis le dégagement latéral 54, le circuit d'échappement est constitué d'abord principalement d'un passage 65 en forme générale d'arc circulaire et dont la section transversale principale en forme générale de triangle rectangle est ménagée entre le bord ou chanfrein latéral de la denture d'engrenage 35 et la face légèrement en retrait 28a (voir la figure 2) par rapport à la face d'étanchéité 28 de l'élément de plaque d'embase 22. Un autre circuit d'échappement de plus faible section est constitué par les divers autres jeux existant entre la denture 35 de l'élément de commande 32 et la paroi cylindrique intérieure du logement 33. Le circuit d'échappement se poursuit ensuite par un passage longitudinal 66 (voir la figure 2) ménagé entre le bord latéral de la crémaillère (chanfrein 67) et la face d'appui 64 de la crémaillère 37 sur le corps 6. Le circuit d'échappement se poursuit encore par un passage annulaire 68 entre la tige 8 et un alésage intérieur 69, de plus grande section que la tige 8 et ménagé dans la vis de butée réglable 44.

Dans la position de butée de la crémaillère représentée sur la figure 1, le passage annulaire 68 est précédé d'un passage 70 ménagé à l'extrémité de la crémaillère 37. Le passage 68 débouche dans une chambre d'échappement 71 protégée des projections extérieures par un cache élastique 72 de communication avec l'atmosphère extérieure.

On va maintenant expliquer le fonctionnement du dispositif de distribution de fluide selon l'invention.

Le cylindre de servo-débrayage 1 est représenté sur la figure 1 en position embrayée et en cas d'usure avancée du disque d'embrayage, car le piston 3 est repoussé par le ressort d'embrayage presque au fond du cylindre 1. On suppose que le conducteur du véhicule équipé du servo-débrayage représenté partiellement sur la figure 1 se propose de commuter un rapport de transmission de son véhicule dès que l'embrayage est en position débrayée. Il alimente pour cela, à partir d'un levier ou boîtier de commande non représenté, le raccord d'alimentation 14 en fluide sous pression, c'est-à-dire ici en air comprimé. Comme on le voit sur la figure 3, la canalisation 24 et la chambre de rappel 57 sont mises sous pression, ce qui a pour effet de presser la plaque de distribution 30 sur la plaque d'embase 22, la canalisation à alimenter 25 restant reliée à l'échappement.

Si le conducteur actionne le débrayage en alimentant la chambre 4 en air comprimé, le piston 3 se déplace vers la droite de la figure 1 en entraînant par le rebord 10 la tige 8 vers la droite. La friction entre le tube fendu 38 et la surface extérieure de la tige 8, entraîne également vers la droite de la figure 1 la crémaillère 37 qui fait tourner la pièce de commande 32 dans le sens inverse de celui des aiguilles d'une montre. Après une certaine course du piston 3 vers la droite, l'arête 55a de la cavité 55 atteint le débouché de la canalisation à alimenter 25 (qui a été préalablement isolée du dégagement latéral d'échappement 54), et relie cette dernière à la canalisation d'alimentation 24. L'air comprimé qui s'écoule dans la canalisation 25 provoque le passage du rapport de vitesse ou du rapport de transmission, par crabotage d'engrenage. Le disque d'embrayage étant très usé, la course du piston 3 vers la droite de la figure 1 se poursuit, la tige 8 glissant dans le tube fendu 38 lorsque la crémaillère 37 est venue en butée sur la face intérieure 6a du logement intérieur du corps 6.

L'embrayage est ensuite réalisé par mise à l'échappement de la chambre d'actionnement 4, ce qui permet au piston 3 de revenir dans la position de la figure 1 sous l'effet de la force de réaction du ressort d'embrayage, bien supérieure à la force de réaction du ressort 5 d'application sur la butée d'embrayage. Au cours du retour vers la position de la figure 1, l'élément de commande 32 et la plaque de distribution 30 qui lui est solidaire en rotation tournent dans le sens des aiguilles d'une montre. La face latérale 54a du dégagement 54 atteint le débouché de la canalisation 25 qui est alors reliée à l'échappement, le rapport de transmission à engrenages qui a été établi par l'alimentation du raccord 15 en air comprimé restant maintenu en position par verrouillage mécanique. La crémaillère 37 vient rapidement dans la position de butée représentée à la figure 1 et le retour vers la gauche de la tige 8 se poursuit par glissement de cette dernière dans le tube fendu 38, de manière à positionner à nouveau la tige 8 par rapport à la crémaillère dans la position qui mesure la course de débrayage réelle (qui est bien inférieure à la course totale du piston 3 et dont la position varie au cours de l'usure de l'embrayage).

En ce qui concerne l'agencement et le fonctionnement respectif de la plaque d'embase 22, de la plaque de distribution 30, de l'élément de commande 32 et du couvercle 20, on doit comprendre que le ressort 46, de même que la pression de fluide régnant dans la chambre de rappel 57, tendent, d'une part, à repousser la surface d'étanchéité mobile 29 sur la surface d'étanchéité fixe 28 et, d'autre part, à repousser avec la même force de réaction la face de fond de l'élément de commande 32 au contact du fond 34 du couvercle 20. Les faces d'étanchéité 28 et 29 qui sont lubrifiées présentent de bonnes qualités frottantes et les faces en contact de l'élément 32 et du fond 34, réalisées généralement en matière plastique et lubrifiées à la graisse, présentent également de bonnes qualités frottantes. Néanmoins, afin de faciliter la rotation de l'élément de commande 32 entraîné par la denture de la crémaillère 37 et de diminuer l'usure de friction entre la face latérale de l'élément 32 et le fond 34, usure qui risquerait de dégrader les étanchéités multiples réalisées par le joint annulaire 53 (qui peut présenter une section adaptée autre que circulaire), on peut prévoir un contact de friction à faible frottement et résistant à l'usure entre l'élément 32 et le fond 34, par exemple à l'aide d'au moins un grain de butée résistant à l'usure en un matériau adéquat tel que céramique, métal, etc. inséré dans l'un ou dans chacun desdits éléments 32, 34.

On remarquera par ailleurs que la force de poussée de contact entre les surfaces 28 et 29 est limitée par le fait que le joint d'étanchéité annulaire 53 présente un diamètre inférieur au diamètre extérieur de la plaque de distribution 30, sensiblement égal à celui de l'alésage borgne 47, et par le fait que la section transversale de la cavité 55, telle qu'elle apparaît sur la figure 1, vient se soustraire de la section transversale de la chambre de rappel 57 pour la détermination de la section soumise à la pression de fluide et appliquant les faces d'étanchéité 28, 29 au contact l'une de l'autre. Il pourrait être utile dans certains cas d'agrandir la section de la plaque de distribution 30 soumise à la pression régnant dans la chambre de rappel 57 jusqu'au diamètre de l'alésage borgne 47. Le joint annulaire d'étanchéité 53 serait alors interposé entre la surface extérieure cylindrique de la plaque 30 et la paroi de l'alésage 47. La chambre annulaire intermédiaire 73 entre l'élément 32 et la plaque 30 (voir la figure 3) et qui est reliée à l'atmosphère par des moyens non représentés (constitués simplement, le cas échéant, par le jeu entre la surface cylindrique extérieure de la plaque 30 et la paroi de l'alésage 47) serait alors intégrée à la chambre de rappel 57. Dans tous les cas, l'action de la pression d'alimentation régnant dans la chambre de rappel 57 applique entre les faces 28 et 29, en plus de la force de réaction du ressort 46, une force de pressage directement proportionnelle à la pression régnant dans la cavité 55 et qui tendrait à provoquer des fuites. L'existence du dégagement latéral 54 en arc (quart) de cercle assure une force de pressage due à la pression qui est toujours supérieure à la force de décohésion par la pression susceptible de se manifester entre les faces d'étanchéité planes en regard 28, 29.

## Revendications

1. Dispositif de distribution de fluide en fonction de la position d'un organe d'actionnement (8) à déplacement axial, ce dispositif comprenant d'une part un élément de plaque d'embase (22) à surface d'étanchéité fixe plane (28), sur laquelle débouche au moins une canalisation (24) d'alimentation en fluide sous pression, et au moins une canalisation (25) à alimenter en fluide sous pression et, d'autre part, un élément de plaque de distribution (30) à surface d'étanchéité plane mobile (29), en appui de façon étanche, sur la surface d'étanchéité fixe plane (28), des passages de liaison de fluide (54, 55) ouverts respectivement vers l'échappement et vers la canalisation (24) d'alimentation en fluide sous pression débouchant sur ladite surface d'étanchéité mobile (29) pour permettre la liaison de la canalisation (25) à alimenter en fluide, soit à l'échappement, soit à la canalisation (24) d'alimentation en fluide sous pression, l'élément de plaque de distribution (30) étant solidaire en rotation d'un élément de commande (32) monté rotatif dans un logement de guidage (33) qui présente une forme générale cylindrique et qui comporte, sur au moins une partie de sa périphérie, une denture d'engrenage (35) qui engrène tangentiellement avec une denture d'engrenage conjuguée (36) ménagée sur une crémaillère (37) rendue solidaire de l'organe d'actionnement (8) à déplacement axial, caractérisé en ce que l'élément de plaque de distribution (30) est monté axialement mobile, sensiblement selon l'axe de rotation de l'élément de commande (32), dans un alésage borgne (47) de l'élément de commande (32), en coopérant avec un joint d'étanchéité annulaire (53) pour déterminer, entre au moins une partie de sa paroi de fond (49) et au moins une partie de la paroi de fond dudit alésage borgne (47), une chambre de rappel (57), reliée en permanence à la canalisation d'alimentation en fluide sous pression (24) par une canalisation de pressurisation (56) ménagée à travers l'épaisseur de l'élément de plaque de distribution (30), et en ce qu'un ressort mécanique de rappel (46) est interposé entre le fond de l'alésage borgne et l'élément de plaque de distribution (30) pour repousser en permanence celui-ci au contact de l'élément de plaque d'embase (22), de manière que la pression de fluide de la canalisation d'alimentation (24) agisse dans la chambre de rappel (57) pour repousser, en parallèle audit ressort de rappel (46), la surface d'étanchéité mobile (29) de l'élément de distribution (30) sur la surface d'étanchéité fixe (28) de l'élément d'embase (22), en prenant appui sur ledit fond d'appui (34) fermant le logement de guidage (33).

2. Dispositif de distribution selon la revendication 1, caractérisé en ce que la crémaillère (37) est rendue solidaire en translation de l'organe d'actionnement (8) à déplacement axial par un organe de liaison à friction (38) qui est susceptible, respectivement, de glisser à friction sur l'organe d'actionnement (8) lorsque la crémaillère (37) est en appui axial de butée dans son passage de guidage (60) et d'entraîner axialement la crémaillère (37) lorsque celle-ci n'est pas en appui axial sur une butée.

3. Dispositif de distribution selon la revendication 1 ou 2, caractérisé en ce que le logement de guidage (33) de l'élément de commande rotatif (32) est ouvert (en 59) sur l'engrènement entre la denture d'engrenage (35) de l'élément de commande (32) et la denture de crémaillère (36) et est ménagé dans un couvercle (20) du logement de l'élément d'embase (22) portant des surfaces opposées (20b, 20c) de guidage axial de la crémaillère, situées respectivement du côté de la denture (36) de la crémaillère et du côté opposé à cette denture, et en ce que ledit couvercle (20) obture ledit logement (33) de l'élément d'embase (22) et présente une surface d'appui (20d) pour une face de la crémaillère (37) qui est latérale par rapport à la denture (36) de la crémaillère.

4. Dispositif de distribution selon les revendications 1 à 3, caractérisé en ce que l'élément de plaque de distribution (30) comporte sur sa surface d'étanchéité plane (29) une cavité (55) de faible profondeur en forme général de bande en arc, s'étendant sensiblement sur un demi-cercle, entourée sur toute sa périphérie par la surface d'étanchéité plane (29) et au fond de laquelle débouche le passage de pressurisation (56) et en ce que la canalisation (24) d'alimentation en fluide sous pression qui traverse l'élément de plaque d'embase (22) débouche sur cette cavité en creux (55) pour toutes les positions en rotation de la plaque de distribution (30), tandis que la canalisation (25) à alimenter en fluide sous pression débouche sur cette cavité en creux (55) seulement sur une zone de fin de course de rotation de la plaque de distribution (30), correspondant à la mise en communication de la canalisation d'alimentation (24) et de la canalisation à alimenter en fluide sous pression (25), à partir d'une position déterminée de l'organe d'actionnement (8).

5. Dispositif selon les revendications 1 à 4, caractérisé en ce que l'élément de plaque de distribution (30) comporte, du côté de sa surface d'étanchéité plane (29), un dégagement latéral (54) en forme de quart de cercle susceptible de venir se placer, d'une part, en face du débouché de la canalisation à alimenter en fluide sous pression (25), pour la relier à l'échappement via un passage ménagé entre la face latérale de l'élément de commande rotatif (32) et l'élément de plaque d'embase (22) et, d'autre part, en face de la surface d'étanchéité plane fixe (28) de l'élément de plaque d'embase (22) hors de tout débouché de canalisation.

6. Dispositif selon la revendication 5, caractérisé en ce que la liaison d'échappement du dégagement latéral (54) est constituée principalement et successivement depuis ledit dégagement latéral (54) par au moins un passage (65) en forme générale d'arc circulaire ménagé entre le bord latéral de la denture d'engrenage (35) de l'élément de commande (30) et l'élément de plaque d'embase (22), puis par un passage longitudinal (66) ménagé entre le bord latéral (67) de la crémaillère (37) et la face d'appui de crémaillère (64) du logement (33) de l'élément de plaque d'embase (22).

7. Dispositif selon la revendication 6, caractérisé en ce que, lorsque le fluide sous pression est de l'air comprimé et lorsque l'organe d'actionnement est une tige (8) qui traverse la crémaillère (37), cette tige (8) est susceptible de traverser une vis de butée réglable (44) de la fin de course axiale de la crémaillère, dans un alésage (69) de ladite vis présentant une section supérieure à celle de la tige (8) pour délimiter un passage annulaire d'échappement (68) qui est relié, d'une part, au passage longitudinal d'échappement (66) ménagé le long de la crémaillère (37) et, d'autre part, à une chambre d'échappement (71) protégée des projections extérieures par un cache élastique (72) de communication avec l'atmosphère.

## Patentansprüche

1. Vorrichtung zur Fluidverteilung je nach der Position eines axialverschiebbaren Betätigungsglieds (8), wobei diese Vorrichtung aufweist: einerseits eine Fussplatte (22) mit einer feststehenden flachen Dichtungsfläche (28) aufweist, auf der wenigstens eine Zuführungsleitung (24) für Druckfluid einmündet, und wenigstens eine Leitung (25) zur Versorgung mit unter Druck stehendem Fluid einmündet, und andererseits eine mit einer flachen beweglichen Dichtungsfläche (29) aufweisenden Verteilungsplatte (30) welche sich dichtungsweise auf die feststehende flache Dichtungsfläche (28) aufstützt, Fluidverbindungsdurchgänge (54, 55), welche jeweils in Richtung des Auslasses und der Zuleitung (24) zur Versorgung mit unter Druck stehendem Fluid welche auf die bewegliche Dichtungsfläche (29) mündet, geöffnet werden, um die Verbindung der Leitung (25) der Fluidversorgung, entweder bei dem Auslass, oder bei der Zuleitung (24) zur Versorgung mit unter Druck stehendem Fluid zu ermöglichen, wobei die Verteilungsplatte (30) drehend aus einem Stück mit einem Steuerelement (32) ist, welches drehend in ein im allgemeinen zylinderförmiges Führungsgehäuse (33) montiert ist und welches, auf wenigstens einem Teil seines Umfangs, eine Getriebeverzahnung (35) die tangential mit einer zugeordneten, auf einer mit dem Betätigungsglied (8) für Axialverschiebung verbundenen Zahnstange (37) angeordneten Getriebeverzahnung (36) kämmt, dadurch gekennzeichnet, dass die Verteilungsplatte (30) im wesentlichen gemäss der Drehachse des Steuerelements (32) in einer blinden Bohrung (47) des Steuerelements (32) axial beweglich eingebaut ist, mit einer ringförmigen Dichtung (53) zusammenarbeitet, um, zwischen wenigstens einem Teil seiner Bodenwand (49) und wenigstens einem Teil der Bodenwand der blinden Bohrung (47), eine Rücklaufkammer (57) zu ermitteln, die stets mit der Zuführungsleitung für Druckfluid (24) verbunden ist durch eine durch die Dicke der Verteilungsplatte (30) angebrachte Druckleitung (56), und dass eine mechanische Rückfeder (46) zwischen dem blinden Bohrungsboden und der Verteilungsplatte (30) angebracht ist, um diesen stets in Kontakt des Grundplattenelements (22) zu drücken, derart, dass der Fluiddruck der Zufuhrleitung (24) in der Rückstellkammer (57) wirkt, um parallel mit der Rückfeder (46) die bewegbare Dichtungsfläche (29) des Verteilungselements (30) gegen die feste Dichtungsfläche (28) der Fussplatte (22) zu drücken, und sich auf dem Stützboden (34) der das Führungsgehäuse (33) schliesst aufstützt.

2. Vorrichtung zu Fluidverteilung nach Anspruch 1, dadurch gekennzeichnet, dass ein Reibungsverbindungsglied (38) bewirkt, dass die Zahnstange (37) bewegungsfest mit dem axialverschiebbaren Betätigungsglied (8) wird, wobei das Reibungsverbindungsglied mit Reibung auf das Betätigungsglied (8) gleiten kann, wenn die Zahnstange (37) in seinem Führungsdurchgang axial aufgestützt (60) ist, und die Zahnstange (37) axial mitschleppen kann, wenn diese nicht axial auf ein Gegenlager gestützt ist.

3. Vorrichtung zur Fluidverteilung nach Anspruch 1 oder 2, dadurch gekennzeichnet, dass das Führungsgehäuse (33) des drehbaren Steuerelementes (32) auf die Kämmung zwischen der Getriebeverzahnung (35) des Steuerelementes (32) und die Verzahnung der Zahnstange (36) mündet (bei 59), und in einer Abdeckung (20) der Unterbringung der Fussplatte (22) angeordnet ist, wobei die Abdeckung seitlich der Verzahnung (36) der Zahnstange gegenüberstehender Axialführungsflächen (20b, 20c) für die Zahnstange (36) und bzw. dieser Verzahnung gegenüberstehender, und dadurch dass die Abdeckung (20) dieser Unterbringung Untebringung der Fussplatte abschliesst und eine Stützfläche (20d) für eine seitlich zur Verzahnung (36) der Zahnstange liegenden Seite der Zahnstange (37) aufweist.

4. Vorrichtung zur Fluidverteilung nach Ansprüchen 1 bis 2, dadurch gekennzeichnet dass die Verteilungsplatte (30) auf ihrer flachen Dichtungsfläche (29 einen Hohlraum von geringer Tiefe (55) aufweist, im wesentlichen in Form eines bogenförmigen Streifens, der sich wesentlich über einen Halbkreis erstreckt und über seinen ganzen Umfang durch die flache Dichtungsfläche (29) umfasst ist, und an dessen Boden die druckbildende Leitung (56) mündet, und dadurch dass die Zuführleitung (24) für unter Druck stehenden Fluid (24), die die Fussplatte (22) durchquert in diesen Hohlraum (55) mündet für alle Drehungsstellungen der Verteilungsplatte (30), und wobei die an Fluid zu versorgende Leitung (25) in diesem Hohlraum (55) nur bei einer Drehungsbeendigungszone der Verteilungsplatte (30) mündet, welche Zone ab einer gegebenen Lage des Betätigungsglieds (8) der Verbindung der Zuführungsleitung (24) und der Leitung zur Versorgung mit unter Druck stehendem Fluid (25) entspricht.

5. Vorrichtung nach Ansprüchen 1 bis 4, dadurch gekennzeichnet, dass die Verteilungsplatte (30), auf der Seite seiner flachen Dichtungsfläche (29), einen seitlichen Abstand (54) in Form einer Viertelkreisfläche aufweist, der einerseits gegenüber der Mündung der Leitung zur Versorgung mit unter Druck stehendem Fluid (25) zu liegen kommt, damit er am Auslass über einen Durchgang, der zwischen der seitlichen Fläche des drehbaren Steuerelements (32) und der Fussplatte (22) angebracht wird, und, andererseits, der feststehenden Dichtungsfläche (28) der Fussplatte (22) gegenübersteht, frei von jeglichen Leitungsabflüssen.

6. Vorrichtung nach Anspruch 5, dadurch gekennzeichnet, dass die Auslassverbindung des seitlichen lichten Abstands (54), hauptsächlich und aufeinanderfolgend vom lichten Abstand (54) ab, aus wenigstens einem, wesentlich in Form eines runden Bogens, Durchlauf (65) besteht, der zwischen der seitlichen Kante der Verzahnung (35) des Steuerelementes (30) und des Fussplattenelementes (22) angeordnet ist und ein Längsdurchgang (66) der zwischen der Seitenkante (67) der Zahnstange (37) und der Stützfläche (64) für die Zahnstange des Gehäuses (33) des Fussplattenelementes (22) angeordnet ist.

7. Vorrichtung nach Anspruch 6, dadurch gekennzeichnet, dass, wenn das unter Druck stehende Fluid Druckluft ist und wenn das Betätigungsglied eine Stange (8) ist, die durch die Zahnstange (37) führt, diese Stange (8) durch eine verstellbare Stützschraube (44) der axialen Endstellung der Zahnstange geht, innerhalb einer Bohrung (69) der Schraube mit einem Durchschnitt der grösser ist als der der Stange (8), zur Abgrenzung eines ringförmigen Auslassdurchgangs (68) der einerseits mit dem Längsauslassdurchgang (66) längs der Zahnstange (37), und andererseits mit einer durch eine zum Schutz von äusseren Spritzern elastische Abdeckung (72) für die Verbindung mit der Atmosphäre geschützten Auslasskammer (71) verbunden ist.

## Claims

1. Fluid servo device for distributing fluid as a function of the position of an axially-displaceable actuator (8), said device comprising, firstly, a baseplate member (22) with a fixed plane sealing surface (28) into which at least one pressurized fluid feed conduit (24) and one conduit to be supplied with pressurized fluid (25) discharge, and, secondly, a distribution plate (30) with a movable plane sealing surface (29) abutting in a sealed manner against said fixed plane sealing surface (28), fluid connecting passages (54, 55) which are respectively open to the discharge and to said pressurized fluid feed conduit (24) terminating at said movable plane sealing surface (29) to enable said conduit to be supplied with pressurized fluid (25) to be connected either to the discharge or to said pressurized fluid feed conduit (24), said distribution plate (30) rotating integral with a control member (32) rotatively mounted in a guide housing (33) of generally cylindrical shape, and which includes on at least a portion of the periphery thereof a gear toothing that meshes with a mating gear toothing (36) provided on a rack (37) integral with said actuator, characterized in that said distribution plate (30) is able to move axially, substantially along the axis of rotation of said control member (32) inside a blind passage (47) of said control member (32) while cooperating with an annular seal (53) in order to determine, between at least a portion of the base wall (49) thereof and at least a portion of the base wall of said blind passage (47), a recall chamber (57) permanently connected to said pressurized fluid feed conduit (24) via a pressurizing channel (56) provided through the thickness of said distribution plate (30), and in that a mechanical recall spring (46) is fitted between the base of said blind passage and said distribution plate (30) in order to permanently urge said member into contact with said baseplate member (22), whereby the fluid pressure in said pressurized fluid feed conduit (24) acts inside said recall chamber (57) in order to urge, in parallel with said recall spring (46), said movable plane sealing surface (29) of said distribution plate (30) against said fixed sealing plane surface (28) of said baseplate member (22), while simultaneously bearing against the abutment base surface (34) closing off said guide housing (33).

2. Fluid servo device according to claim 1, characterized in that said rack (37) is rendered integral in translatory motion with said actuator (8) via a friction connecting member (38) which is respectively able to frictionally slide on said actuator (8) when said rack (37) is in axial abutment against said guide passage (60) and to axially drive said rack (37) when it is not in axial abutment against an end stop.

3. Fluid servo device according to claim 1 or 2, characterized in that said guide housing (33) of said control member (32) is open (at 59) at the meshing region between said gear tooth (35) and said control member (32) and the rack toothing (36) and is provided in a cover (20) of said baseplate member (22) carrying facing surfaces (20b, 20c) for axially guiding said rack, respectively located on the toothed side (36) and on the opposite side thereto of said rack, and in that said cover (20) closes off the housing of said baseplate member (22) and has a support surface (20d) for a face of said rack (37) which is lateral with respect to said toothing (36) of the rack.

4. Fluid servo device according to claim 1 to 3, characterized in that said distribution plate (30) carries on its movable plane sealing surface (29) a shallow recess (55) generally in the shape of an arched strip extending substantially over a semi-circle, surrounded over the whole periphery thereof by said movable plane sealing surface (29) and at the base of which said pressurization passage (56) discharges, and in that said pressurized fluid feed conduit (24) which passes through said baseplate member (22) discharges into said recess (55) at all positions of rotation of said distribution plate (30), whereas said conduit to be supplied with pressurized fluid (25) discharges into said recess (55) only in a region corresponding to the end of rotary travel of said distribution plate (30), corresponding to the establishment of communication between said pressurized fluid feed conduit (24) and said conduit to be supplied with pressurized fluid (25), starting at a predetermined position of said actuator (8).

5. Fluid servo device according to claims 1 to 4, characterized in that said distribution plate (30) carries, at its side corresponding to said movable plane sealing surface (29), a lateral clearance (54) in the shape of an arc of a circle able to be located, firstly, opposite the outlet from said conduit to be supplied with pressurized fluid (25), in order to link it to the discharge, via a passage formed between the lateral face of said control member (32) and said baseplate member (22), and, secondly, opposite said fixed sealing plane surface (28) of said baseplate member (22), away from any possible discharge of said channel.

6. Fluid servo device according to claim 5, characterized in that the discharge connection of said lateral clearance (54) is principally made up, starting from said lateral clearance (54) by, successively, at least one generally circular arc-shaped passage (65) provided between the lateral edge of said meshing toothing (35) of said control member (30) and said baseplate member (22), then through a longitudinal passage (66) provided between the lateral edge (67) of the rack (37) and the supporting face for said rack (64) of the housing (33) of said baseplate member (22).

7. Fluid servo device according to claim 6 characterized in that, when the pressurized fluid is compressed air and when said control member is a rod (8) passing through said rack (37), said rod (8) is able to pass through an adjustable axial end-of-travel stop screw (44) for the rack, inside a passage (69) of said screw of larger cross-section than said rod (8) in order to define an annular discharge passage (68) which is connected, firstly, to said longitudinal discharge passage (66) provided along said rack (37) and, secondly, to a discharge chamber (71) protected from external soiling by a resilient cover (72) that is in communication with the atmosphere.
